# EUROPEAN PATENT APPLICATION

(11) **EP 4 529 979 A1**
(43) Date of publication of application: **02.04.2025**
(21) Application number: 23000133.1
(22) Date of filing: 29.09.2023
(51) Int. Cl.: B01J 8/00, C01B 3/04

(54) **PROCESS AND REACTOR FOR GENERATING THERMAL ENERGY AND BASE CHEMICALS**

(71) Applicant: Energy 13 GmbH, 07743 Jena (DE)
(72) Inventor: PORTUGUES, Lawrence, 62840 Lorgies (FR); DENTLER, Carten, 61350 Bad Homburg (DE)
(74) Representative: Ackermann, Joachim

(57) **Abstract**

Disclosed is a process for producing thermal energy and base chemicals and a reactor used for this process. The reactor contains a reaction space for oxidizing metal fuel with water and optionally other oxidants. The reaction space is connected at its outlet with a separation device for solids contained in the product gas leaving the reaction space. In the reaction space a first flame is generated which triggers the reaction of metallic fuel with oxidant to generate a second flame within the reaction space. The first flame is generated by using a fuel mixture which is introduced into the reaction space via one or more feed lines. At the end of this feed line(s) an ignition device acts on the fuel to ignite the first flame which in turn triggers the formation of the second flame. The thermal energy generated by the oxidation reaction is recovered by using one or more heat exchangers which may be placed at different lociations of the reactor.

With the reactor and the process of this invention hydrogen and/or cabon monoxide is generated from metal fuel and water or CO₂. When using water and carbon dioxide as oxidant a mixture of hydrogen and carbon monoxide is produced. These products can be used as base chemicals in various processes.

## Description

### Technical Field

This invention relates to scalable metal-fuel concepts, to a reactor designed for oxidizing metal fuel and to optimized chemical conversions for generating energy and base chemicals at the same time for industrial use.

### Background of the Invention

This invention concerns the growing interest of transporting and storing energy, especially renewable helio-ecological energy and mashing the process streams with the global need of non-petrochemical or fossil chemical feedstock such as hydrogen, CO and all productes and goods derived thereof in all existing and future diverse regional industrial branches including the carbon use as its most reduced organic-chemical compounds.

This invention addresses the need for raw-materials, chemicals and intermediates in a helio-energy driven circular economy with optimized energetic volume density transport and efficient release.

Industrial branch standards in fact even grew into global use of charcoal carbon by itself as caloric or chemical feedstock in metallurgical processes practised until today. In such processes minerals especially oxides are reduded to manufacture specific metallurgical phases, such as steel or steel alloys and the reduction of electricity by graphite electrodes in classic aluminium smelters.

On the shoulders of the fossil carbon sources whether gas, refined crude oil or anthracite, all kinds of gasification and liquidation generated an interconnectivity of different manufacturing processes. Guided by the global or local energy prizes this interconnectivity allowed the chemical industry to switch their processes several times after the second world war or under political or block embargoes. As a consequence even hydrogen and food feedstock or fertilizer where made available on that technical-economic basis and more direct procedures, such as electricity-to-fertilizers or hydrogen-to-metals, stepped back.

To our knowledge all product branches thus could be inverted, converted or redirected to renewable energy sources and most products could be produced minimizing or avoiding CO₂ generation with the exception of food or feedstock metabolites in animals and mammalians itself. As this source of atmospherically diluted CO₂ is difficult or hard to be avoided the establishment of CO₂ itself as a source of carbon-based products, such as food or chemicals is necessary as the historic procedures prove to be too slow to sequestrate the 400 ppm peak in air reached in very short time.

The reaction types optimized in classical industrial processes to emit oxygen as CO₂ out of the Aluminium smelter cell shows exactly this economic and technical double advantage of using carbon in such base material production reactions. Due to its cheap caloric resource to reduce the activating and simply heating electric power by actually net combustion of the carbon-graphite electrodes. The economic trade-off was grid-electricity costs against graphite electrode combustions. CO₂ release as exhaust gas and the carbon mineral were strictly the cheapest option.

400 ppm of CO₂ in air will be reached within the next decades and a natural reduction of this value would need historical time even once CO₂-emissions are kept or dramatically reduced from human sources including traction, transport, agriculture, consumer goods and animal breeding. Thus all these air-CO₂-diluting industrial or domestic processes are prone to become banned and are net deficitary as per their environmental damage encountered already as by today.

Carbon capture and carbon sequestration as end-of pipe solutions are expensive philanthropic and will not provide preventive solution within the cyclic need of said value materials and feedstocks that will grow by growing "green" in sustainable perfectly circular economies.

Again the urgent need for transported energy to yield or to produce metals regionally in the pure or technical form show their high enthalpic energetic state in a thermodynamic sense and together with their mineral oxides in turn would represent a high volumetric way to store and release chemically. In other words, hydrogen as gas has the highest gravimetric density of heat in combustion energy and the transformation of metals to their oxides perform the highest practical volumetric enthalpic yield per volume in theory.

Most technical industrial high temperature flame processes like the manufacturing of glass, metals or sinter materials can be rebuilt using the hydrogen flame heat or providing hydrogen reduction using electrical arcs by burning it in air or oxygen gas processes. This oxidation as a coutinuous flame is fortunately industrial high temperatue standard as many such processes cannot be achieved with electric resistor heat.

This invention demonstrates a new optimized solution to mesh all advantages and material streams mentioned above by providing a high volume-time yield conversion of stock metal yielding electricity on demand by using an easy and safe transport-infrastructure (global metal/metal-oxide cycle) and by producing hydrogen and standard carbon-intermediates continuously at the same time for base chemicals from abundant H₂O and CO₂ fed back from and into the cycles.

### Prior art

Processes of using metals as fuel converters are generally known.

WO 2014/173991 A1 proposed a full developed chemical-industrial hyperbranch of circles using aluminium as an energy storage material which is reacted with CO₂ to generate thermal energy for caloric grid-energy production and at the same time for converting CO₂ to CO which is used as a base chemical for synthesis of chemicals.

Metal burners using air or oxygen gas with no chemical feedstock transformation are generally known.

In DIS-Vertrags Nr.: 150401 Programm Solarchemie/Wasserstoff; Bundesamt für Energie BFE Schlussbericht Juni 2004; Aluminium als Brennstoff und Speicher; J. Wochele, Dr. Chr. Ludwig; Paul Scherer Institut CH-5232 Villigen results about the Aluminum-Alumina cycle as renewable electric energy storage are reported. Key hurdles for air or oxygen combustion of Aluminum metal to its oxide are disclosed. In this report a flame reactor was proposed and established which has been developed from an aluminum oxidizer. Most interestingly in this analysis it was stated that the biggest loss in such energy cycle would be the carbon electrode itself, so the today established industrial introduction of low abrasive electrodes would yield a reasonable energy-storage-energy cycle per se.

Another group, Trowell, focuses on reacting aluminum in contact with water to release the reaction enthalpy in the form of heat and hydrogen. The result would be instant access to clean power, with no release of greenhouse gases. In a 2018 talk Trowell explains the underlying reactions and potential applications of this technology concept. While laboratory work has shown that the use of metal fuels with heat engines is technically feasible, no one has yet demonstrated the conversion in practice. One concept has been disclosed, for example, by BERGTHORSON, J.M. ET AL.: "Metal-Water Combustion for Clean Propulsion and Power Generation", APPLIED ENERGY, vol. 186, 1 January 2017 (2017-01-01), pages 13 - 27, XP055746514

The next step toward turning the lab findings into usable technology, therefore, will be to build a prototype conversion and couple it to a heat engine, again with a focus to optimize particle conversion at lower temperatues by proposing specialty metal powders including nano-spheres; compare https://www.mcgill.ca/newsroom/- channels/news/could-metal-particles-be-clean-fuel-future, published 2015.

Prof. Jeff Bergthorson of McGill University plans to collaborate with Siemens Energy, Rio Tinto, Teck Resources Limited, Agnico Eagle Mines Limited and Hydro-Québec in a structuring project to develop an alternative technology for the continuous reaction of metals with high-pressure, high-temperature water to generate electricity, hydrogen and/or heat.

F. Halter and Chauveau published an attempt of CO₂ conversion towards a robust flame reporting low conversion, intermediates yield and droplet passivation even when using specially micronized Aluminium in a diluted transport gas set-up.

Alexandre Braconnier et al. published an attempt of CO₂ conversion towards a robust flame reporting low conversion, intermediates yield and droplet passivation even when using specially micronized Aluminium in a diluted transport gas set-up (see Alexandre Braconnier, Stany Gallier, Fabien Halter, Christian Chauveau; Aluminum combustion in CO2-CO-N2 mixtures; Proceedings of the Combustion Institute, Elsevier, 2021, 38 (3), pp.4355-4363). The authors report that Aluminum is found to burn in pure CO₂ with a visible diffusion flame. In pure CO, they confirm that the particle undergoes a weak combustion. The oxidation is sustained by heterogeneous reactions, without any envelope flame. It quickly comes to a halt, supposedly due to the formation of a passivation layer on the surface. Combustion in mixtures of CO₂ and CO suggests an almost inert behavior of CO and CO₂/N₂ mixtures similarly give a globally inert behavior of N₂.

All published apparatus designs and results are not indicating that those teams have overcome the scientific prejudice that only supercritical high pressure water vapour equipment using specialty micronized or even nanosize aluminium would allow for a clean hydrogen yield with substantial caloric energy for industrial exploitation.

Bergthorson states that developing metal recycling processes that don't involve CO₂ emissions is also critical; compare https://www.mcgill.ca/newsroom/channels/- news/could-metal-particles-be-clean-fuel-future-257172.

The inherent unknown path to a switch from air or oxygen burner combustion to aluminium water and CO₂ conversion is the lower intrinsic caloric heat produced in the flame and the potentially lower or chemically diverted reactions inhibiting the yield, both, energetic as well as chemical.

For continuous use all academic or published industrial methods typically only show principles, hurdles and optimize few aspects of a continuous metal-fuel combustion. Fewer technical or academic theoretical considerations show solutions for metal-fuel reactors towards bulk material use and technically scalable processes.

Oxygen burners using special micronized Aluminium yield a stable continuous flame (F. Halter et al. in Applications in Energy and combustion Science, Vol. 13, https://doi.org/10.1016 (2023)). Al, Mg and the Alkali metals and their alloys are reported to show self-sustained air-oxygen reactions from gas propelled powder transport. The reported temperatures indicate the importance of the self sustained kinetic within the flame geometry.

Even fewer tackle the problem of chemical conversion especially hydrogen from water or CO₂ to CO.

WO 2021/228429 A1 disclosses the advantage of a liquid meatl fuel present in all Al smelting architectures to be dispersed into a reactor with precursor gases containing H₂O or CO₂ and yields reasonable turnover together with the heat introcuced by the liquid aluminium into the system.

As cited above although there is lot of scientific and theoretical hypothesis work about reaction of Al with air, O₂, but especially and more importantly H₂O and CO₂ no technical burner or converter has been described that facilitates a stable flame under continuous dosing of solid Al and which does not plug and in air or oxygen only with the use of a micronized Aluminium preparation.

The use of Al as energy storing material and oxidation with air for heat generation in a pilot scale burner has been investigated in Paul Scherer Institute in Switzerland (compare J. Wochele, Chr. Ludwig; Aluminium als Brennstoff und Speicher. Bundesamt für Energie BFE (2004); https://infoscience.epfl.ch/record/165265).

Even after several steps of optimization the burner blocked although the oxidation of Al with an oxygen containing gas like air is understood to be easier to be conducted than the oxidation without oxygen. The difficulty of perfoming an oxidation of Al with CO₂ or H₂O can be recognized in a review on combustion conditions (compare M. Beckstead; Correlating aluminum burning times. Combust. Explo. Shock Waves 41 (5) (2005) 533-546; https://doi.org/10.1007/s10573-005-0067-2).

Another parameter that reveals the difficulty of oxidation of Al with the oxidizers H₂O and CO₂ compared to O₂ is the time to burn a particle, which is intrinsically much longer in case of H₂O and CO₂ (compare M. Beckstead; Correlating aluminum burning times; Combust. Explo. Shock Waves 41 (5) (2005) 533-54; https://doi.org/10.1007/-s10573-005-0067-2; or Alexandre Braconnier, Stany Gallier, Fabien Halter, Christian Chauveau ; Aluminum combustion in CO2-CO-N2 mixtures; Proceedings of the Combustion Institute, Elsevier, 2021, 38 (3), pp.4355-4363; https://doi.org/10.1016/-j.proci.2020.06.028; or Dilip Srinivas Sundaram, Puneesh Puri, Vigor Yang; A general theory of ignition and combustion of nano- and micron-sized aluminum particles; Combustion and Flame Volume 169, July 2016, Pages 94-109; https://doi.org/10.1016/j.combustflame.2016.04.005).

Furthermore, the adiabatic flame temperature indicates the difficulty for accomplishing stable technical conversion. From D. S. Sundaram UDC 536.46 a, V. Yanga, and V. E. Zarkob; Combustion of Nano Aluminum Particles (Review). Combustion, Explosion, and Shock Waves, 2015, Vol. 51, No. 2, pp. 173-196., DOI: 10.1134/S0010508215020045 it is known that the adiabatic flame temperature is much lower and therefore much closer to the evaporation temperature of Al with CO₂ and H₂O than it is for O₂ or air.

Also, the particle size has an influence on the implementation of full oxidation of aluminium mass. For example, Dilip Srinivas Sundaram, Puneesh Puri, Vigor Yang; A general theory of ignition and combustion of nano- and micron-sized aluminum particles. Combustion and Flame Volume 169, July 2016, Pages 94-109. https://doi.org/10.1016/j.combustflame.2016.04.005 report that oxidation time increases significantly with particle size. Moreover, it is general knowledge that higher volume specific surface of smaller particles supports mass transfer.

The necessity to establish a special "flammable" particle in a circular production of hydrogen from water and Al is reported in CN 10979584 A. Herein not only an atomizing separating step with energy intake and dissipation loss is a necessary attribute but even an in-process control is needed to assure the quality of the water contact phase with the right micronized powder distribution. This is a technology far from scalability and practical time-volume yields in an industrial scale. Furthermore, a corrosion inhibitor is needed to ensure the breaking-down of the passivation shell around any Al-seed or Al-droplets during water steam contact. In other words, CN109795984 A again repeats the technical prejudice by adding compartment device solutions to the different problems created by the low temperature and low enthalpy reaction compared to air and oxygen results in the literature and implements a step-by-step process. From this document no reaction conditions can be derived for a process or reactor that integrate all necessary materials to provide a self-sustained flame phase.

The objective of the present invention is the provision of a process of converting selected metals in an atmosphere comprising H₂O, H₂O and CO₂, H₂O and NH₃ or H₂O, CO₂ and NH₃ and optionally inert gases which allows a sustained flame.

Another objective of the present invention is a reactor that is designed to carry out a process of effectively converting selected metals in an atmosphere comprising H₂O, H₂O and CO₂, H₂O and NH₃ or H₂O, CO₂ and NH₃ and optionally inert gases by providing a sustained flame.

### Summary of the invention

Surprisingly it has been found that these objectives can be solved by providing in a first step heating of a larger amount of the combustible metal to cause at least a portion of said combustible metal to melt or even to evaporate. In this first step a small ignition energy source, a first flame, is used to ignite the larger amount of combustible metal allowing for melting or even evaporation of a said combustible metal in the presence of H₂O or H₂O containing oxydants and to generate a second flame. The propagation of this second flame is maintained by adding a continuous stream of this larger amount of combustible metal and H₂O or H₂O containing oxydants to convert these to products in high yield and sustaining its own high enthalpic process as a second flame.

The present invention relates to a process for producing thermal energy and base chemicals in a reactor having a reaction space with an inlet zone for reactants, a central zone and an outlet zone for a product gas, comprising at least the measures:
a) providing metallic main fuel selected from silicon, magnesium, iron, aluminum or alloy containing these metals in the inlet zone of the reaction space,
b) introducing H₂O or CO₂ or mixtures containing H₂O, CO₂ and/or NH₃ or H₂O, CO₂ or said mixtures diluted with inert gases into the inlet zone of the reaction space,
c) introducing particles of metallic secondary fuel and oxidant or hydrogen and oxidant or mixtures of two or more of said particles, hydrogen and oxidant into said inlet zone using one or more feed lines ending in said inlet zone and generating a mixture of said particles and oxidant or of said hydrogen and oxidant at the end of said feed line(s),
d) providing a first flame generated by oxidizing the mixture of particles of metallic secondary fuel and oxidant or of hydrogen and oxidant at the end of said feed line(s) which first flame is directed towards the metallic main fuel present in the inlet zone,
e) generating a reaction zone by the action of said first flame by melting and/or evaporating a portion of said metallic main fuel thereby causing said metallic main fuel to react with the H₂O, with the CO₂ or with the H₂O, CO₂ and/or NH₃ to generate a second flame resulting in a product gas containing hydrogen and oxidized metal or carbon monoxide and oxidized metal or hydrogen, carbon monoxide and/or nitrogen and oxidized metal and optionally inert gas(es),
f) discharging the product gas from the reaction space exit zone via a discharge line and introducing the product gas into a separation device for solids,
g) separating the solids from the product gas in the separation device, thereby producing a purified product gas having no or a reduced solids content,
h) discharging the purified product gas from the separation device, and i) transferring thermal energy generated in the reaction space, in the product gas and/or in the purified product gas into a heat transfer medium and using this thermal energy for generation of electrical energy and/or for heating purposes.

In another embodiment the invention relates to a reactor for generating thermal energy and base chemicals containing at least the elements:
A) a reaction space formed by a reactor jacket with an inlet zone for reactants, a central zone and an outlet zone for a product gas, which has at least one feed line opening into the inlet zone for metallic main fuel and/or for H₂O or CO₂ or for mixtures containing H₂O, CO₂ and/or NH₃ and optionally inert gas(es) and at least one discharge line located in the outlet zone for the product gas,
B) at least one separation device for solids from the product gas, which is connected to the discharge line from the reaction space, and in which a purified product gas is produced,
C) at least one heat exchanger transferring thermal energy generated in the reaction space, in the product gas and/or in the purified product gas into a heat transfer medium, which heat exchanger is connected with the reactor jacket and/or connected with the discharge line from the reaction space to the separation device and/or connected with a discharge line removing the purified product gas from the separation device, characterised in that
D) at least one feed line for particles of metallic secondary fuel or hydrogen or oxidant or for mixtures of said particles, hydrogen and/or oxidant which ends in said inlet zone and supplies said particles, hydrogen, oxidant or mixtures thereof to generate a mixture of said particles and oxidant or of said hydrogen and oxidant at the end of said feed line(s) for establishing a first flame, and
E) at least one ignition device to ignite the mixture at the end of said feed line(s) D) to generate a first flame at the end of said feed line(s) thereby generating a reaction zone by transferring thermal energy to metallic main fuel present in the inlet zone of said reaction space to cause a portion of the metallic main fuel to melt and/or to evaporate and to ignite a second flame by initiating reaction of the metallic main fuel with the H₂O or with the mixture containing H₂O, CO₂ and/or NH₃.

### Detailed Description of the Invention

The invention comprises a scalable process and a scalable reactor for the generation of power heat for local or grid use and essential base chemical gases hydrogen and carbon monoxide for decarbonized processes including raw materials and goods such as steal, syngas, synfuel, food chain ingredients as well as chemicals. For this high conversion rates and continuous or quasi continuous operations are needed as well as fast start and shut down typical for large industrial reactors and ovens. The weaker reaction enthalpy and the slower germ-kinetics are effectively overcome in the confluence of a smaller flame zone allowing a sustained reaction of a much larger conversion zone of bulk metal fuel to be molten and/or evaporized into a visible radiating large sustained plasma zone yielding both, heat power and continuous non plugging oxide particles with a size and a density that those are driven out of the reaction radiation space (flame space). The standard reactor steal alloys in one embodyment were cooled by the heat transport and robust for both the expected water vapour corrosion and the hydrogen steal diffusion effects.

Standard methods in scaling and gas separation can now be applied using the breakthrough of the invention for high yield and high durability. The CO-toxicity and the hydrogen safety limits are known and well managed in large industrial settings. The fuel as well as the circulated transported materials in this economy are extremely inert, and stable in human environment and environmental friendly. The technology can be handled in all reagions of the world and in all economies from local small equipment to large conglomerates and metropoles.

The process of this invention is preferably a continuous process. But the process can also be operated in a batchwise manner.

The reactor and the process of this invention are scalable within a broad range. Typical scales range from 10 kW to 10 GW, preferably from 50 kW to 1 GW of electrical energy produced from the heat generated by the process or the reactor, respectively.

In step a) of the process of this invention metallic main fuel selected from silicon, magnesium, iron, aluminum or alloy containing these metals is introduced into the inlet zone of the reaction chamber. Silicon which is a metalloid is designed in this application as a metal.

In step b) of the process of this invention H₂O, or CO₂ or mixtures containing H₂O, CO₂ and/or NH₃ are introduced into the inlet zone of the reaction chamber. This feed stream can optionally be diluted with inert gases, for example by nitrogen or argon.

Steps a) and b) can be carried out separately. Thus metallic main fuel and H₂O or CO₂ containing streams can be introduced via separate feed lines into the reactor chamber. In an alternative embodiment steps a) and b) can be carried out in a combined manner. Thus metallic main fuel and H₂O or CO₂ containing streams can be introduced as mixtures via one or more feed lines into the reactor chamber.

Metallic main fuel can be used in the form of powder, granules, strips, wires, ingots or strands, preferably through continuous or discontinuous reactor feeds, optionally using airlocks. Preferred are powders of metals or metal alloys.

Metals used in the process of this invention are silicon, magnesium, iron or preferably aluminium. As an alternative alloys containing two or more of these metals can be used. Examples of alloys are Aluminium-Magnesium alloys and Silicon-Aluminium alloys.

Metallic fuel can by prepared from the corresponding oxdies by melt electrolysis, preferably by using electricity from regenerative sources, such as photovoltacis or wind energy. Metallic fuel can also be used as metal scrap, preferably as Aluminium scrap.

The oxidation of the metallic main fuel in a flow-through reactor is particularly preferred to occur in a gas mixture with a predominant flow of H₂O or CO₂ or NH₃ or H₂O and CO₂ or H₂O and NH₃ or H₂O, CO₂ and NH₃. The oxidation of the metallic main fuel preferably occurs in the substantial absence of oxygen gas. In essence, this means that the controlled addition of small amounts of oxygen gas, while not optimal, is still possible in principle without affecting the reaction as described, especially for the small flame or from the preferably initiating ignition device. However, better results are obtained in the absence of oxygen gas. Particularly preferably, therefore, the oxidation of metallic fuel is carried out in the absence of oxygen gas. Optionally inert gases can be present in the gas mixture in order to dilute the oxidant gas.

The metals or metal alloys used as a metallic fuel in the process of this invention are available as a metallic raw material on an industrial scale and represent an alternative to other transportable energy sources. The metals or metal alloys are inert and non-hazardous to store and transport. This gives these metals or metal alloys a significant advantage as an energy source over crude oil, natural gas or coal, which are considered to be much more hazardous to the environment from their exploitation, their refinement, distribution and transport as well as their downstream use.

The oxidant H₂O is available from known sources. All kinds of water from all kinds of sources can be used. Fresh water can be used as well as salt water. Preferred is fresh water. H₂O can be fed into the reactor as water vapour or as water mist. Preferred is water vapour.

The oxidant CO₂ can be obtained from atmospheric gas, from combustion processes of all kinds or from other sources, and thus be removed from the atmosphere or industrial cycles. The process of this invention therefor has the advantage that no CO₂ is produced in the associated energy production, but is actually consumed. The resulting metal oxide is collected and highly inert and does not lead to any environmental pollution.

The resulting reaction product(s) hydrogen or cabon monoxide or hydrogen and carbon monoxide are hazardous gases. However, extraction, handling and storage of hazardous gases have been possible for a long time and, in particular, according to the process technologies used in the chemical industry today, without any problems and in compliance with appropriate safety standards. The risk potential of carbon monoxide and hydrogen is thus on a par with that of other hazardous chemical substances. The reaction product(s) hydrogen and/or carbon monoxide can be used advantageously in many industrial processes. Hydrogen can be used in many reduction processes, for example to produce metals, such as iron, from metal oxides, or to carry out hydrogenations of organic compounds. Hydrogen can also be used as a fuel or as a source of thermal energy. Mixtures of carbon monoxide and hydrogen can be used in many industrial processes to produce energy-rich hydrocarbon compounds, such as for the production of fuels, such as kerosene. Increased use of the process of the invention would provide carbon monoxide and/or hydrogen fuel for industrial purposes. The combustion of hydrocarbons from the reaction products of carbon monoxide and hydrogen would in turn provide carbon dioxide, which can again be fed to the process according to the invention or when comming from this process is at least CO₂-footprint neutral. The essential advantage of the process according to the invention thus consists in a universally, decentrally and rapidly applicable energy generation, without additional CO₂ pollution of the environment caused thereby, whereby the reaction product(s) hydrogen or hydrogen and carbon monoxide can be fed to a material cycle.

Nitrogen as inert transport gas for dilution and flame process control will not lead to the undesired NOx-problem of oxygen-rich burners. This is an important quality and advantage of the high temperature low oxygen process of this invention as the metal proved to capture oxygen at these reaction kinetics and temperature to the advantage of this gas purification.

Reactant NH₃ is also available from known sources. NH₃ can be used as a source of hydrogen. The oxidation reaction(s) in the reactor generate huge amounts of thermal energy and therefore high temperatures are present in the reactor chamber. This avoids formation of nitrogen oxides as by-products from the nitrogen generated by NH₃ decomposition.

In step c) of the process of this invention particles of metallic secondary fuel and oxidant or hydrogen and oxidant or mixtures of two or more of said particles, hydrogen and oxidant are introduced into the inlet zone of the reactor.

Particles of metallic secondary fuel and oxidant or hydrogen and oxidant can be introduced via separate feed lines into the reactor inlet zone. In an alternative and preferred embodiment mixtures of particles of metallic secondary fuel and oxidant or of hydrogen and oxidant are introduced via common feed line(s) into the reactor inlet zone.

The feed line(s) for secondary fuel and oxidant terminate within the reactor inlet zone and the feed stream(s) of secondary fuel and oxidant are oriented in a manner that separate feed streams of secondary fuel and oxidant mix at the end of said line(s) within the reactor inlet zone. This mixture of secondary fuel and oxidant is ignited by means of an ingnition device to generate a first flame at the location of the secondary fuel-oxidant mixture.

In an alternative and preferred embodiment the secondary fuel-oxidant mixture is generated outside the reactor and is provided via feed line(s) into the reactor inlet zone.

At the end of the feed line(s) the mixture of secondary fuel and oxidant is ignited in step d) by means of an ingnition device to generate a first flame at the location of the secondary fuel-oxidant mixture.

As metals for the secondary fuel the same metals can be used as for the main fuel. Thus silicon, magnesium, iron and preferably aluminium particles or particles of alloys of two or more of these metals can be used.

Generally metallic particles used in step c) have diameters below 100 µm, preferably below 10 µm. A preferred diameter range for metallic particle is between 100 nm and 10 µm.

As oxidants oxygen, air or oxygen-containing chemicals can be used in step c). Preferred oxidants are oxygen, air, H₂O and/or CO₂.

Different ignition devices can be used for igniting the mixture of secondary fuel and oxidant to generate the first flame. Ignition devices are known to the skilled artisan.

Examples of ignition devices are electric arcs arranged in the inlet zone at the end of the feed line(s), inductive heaters or lasers arranged outside the reactor, the radiation of the laser being coupled into the reaction chamber through one or more windows in the reactor jacket or the inductive heater generating heat acting on the space region at the end of the feed line(s) to generate the first flame.

The first flame generated in step d) is used to generate in step e) a second flame which forms a reaction zone by reaction of metallic main fuel with H₂O or CO₂ or with H₂O, CO₂ and/or NH₃. Thus, the first flame triggers the main reaction by igniting the metallic main fuel to react in an oxidation reaction. By this a second typically larger flame is formed.

In order to trigger the main reaction the first flame must be directed towards the metallic main fuel that is present in the reactor inlet zone. Moreover, the first flame generates a temperature within the metallic main fuel that at least a portion of said metallic main fuel melts. This causes said metallic main fuel to react with the H₂O the CO₂ or with the H₂O, CO₂ and/or NH₃ and to generate a second flame, preferably from at least partially vapourized metal fuel. The oxidation reaction of the metallic main fuel results in a product gas-particle mixture containing hydrogen and oxidized metal or carbon monoxide and oxidized metal or hydrogen, carbon monoxide and/or nitrogen and oxidized metal, depending on the oxidant used in the main reaction.

The temperature of the second flame can be controlled via the process conditions. For example the throughput of the metallic main fuel and H₂O or CO₂ or H₂O containing oxidant through the reactor, the optional presence of inert gases or the continued presence of the first flame may influence the amount of heat generated during the oxidation reaction.

The first flame is used to trigger the reaction between metallic main fuel and H₂O and/or CO₂ containing oxidant. Thus, step c) is used to provide ignition of the metallic main fuel only and may be terminated after the second flame has been established. As an alternative, step c) can be continued after said ignition during the main reaction between metallic main fuel and the H₂O and/or CO₂ containing oxidant in order to support the stability of the second flame even under turbulent conditions.

In a preferred embodiment of the inventive process a temperature in the first flame in the range between 2500 and 3500°C, preferably between 2500 and 3000°C is generated. This will guarantee an ignition of the metallic main fuel and formation as well as propagation of the the second flame.

In a preferred embodiment the second flame generates temperatures within the metallic main fuel that at least a portion of said metallic main fuel evaporates. In this embodiment the process conditions are chosen in a manner, so that the second flame continues to cause a portion of the metallic main fuel to evaporate. This can be achieved, for example, by controlling the throughput of metallic main fuel and oxidant or by using a selected molar ratio of metallic main fuel and oxidant in the reaction zone. Preferably temperatures of 2000°C or higher are generated, more preferred temperatures between 2000 and 3500°C, and very preferred temperatures between 2500 and 3000°C. The temperatures in the reaction zone are measured by using a radiation thermometer.

In the fuel stream for the second flame low fractions of oxygen may be present. The amount of oxygen in a feed gas stream is 5 Vol.-% or lower. But preferably no oxygen is present in a feed gas stream. The feed gas stream for the second flame is optimized to turnover into hydrogen or into CO or into hydrogen and CO. Although oxygen would always contribute to increase the heat enthalpy of the process, however this results in a lower yield of the desired base chemical products per metal fuel.

In step e) a reaction zone is generated by the action of the first flame by melting a portion of the metallic main fuel thereby causing said metallic main fuel to react with H₂O or with CO₂ or with H₂O, CO₂ and/or NH₃ to generate a second flame resulting in a product gas containing hydrogen and oxidized metal or carbon monoxide and oxidized metal or hydrogen, carbon monoxide and/or nitrogen and oxidized metal. Optionally inert gas(es) are present in the product gas if such inert gas(es) are introducted into the inlet zone of the reactor. In general, the product gas consists of hydrogen and oxidized metal or of carbon monoxide and oxidized metal or of hydrogen, CO and oxidized metal, or of hydrogen, N₂ and oxidized metal, or of hydrogen, CO, N₂ and oxidized metal. In case of incomplete reaction the product gas can also contain minor proportions, e.g. up to 10 vol.-%, of H₂O, CO₂, NH₃ and/or unreacted metallic fuel. While product gas ingredients hydrogen, N₂, CO, H₂O, CO₂, NH₃ and inert gas(es) are present as gases product gas ingredients oxidized metal and metallic fuel are present as particulate solids.

In step f) the product gas is discharged from the reaction space exit zone via a discharge line and is introduced into a separation device for solids. One or more discharge lines may be present which discharge into one or more separation devices. Preferably one discharge line is present which discharges into one separation device.

Different separation devices can be used. These devices are known to the skilled artisan in the field of flue gas purification.

Examples for separation devices are centrifugal separators, known as cyclones, or fabric filters or electric filters or ceramic filters. Preferred separation devices are cyclones.

Cyclones serve as mass force separators in technical plants for the separation of solid or liquid particles contained in gases. Cyclones are used, for example, for flue gas cleaning. Centrifugal forces, which are created by generating a vortex flow, are used for separation. In the cyclone, the product gas, as the carrier of the particles to become separated, is set into a rotating motion by its own flow velocity through the suitably designed fixed separator. The solid particles are separated in the cyclone by the particle mass. Common outer diameters of cyclones range from 20 cm to 6 m. The particle-loaden product gas can be fed tangentially or axially to the rotationally symmetrical separator chamber. In both designs, the particles are transported to the wall of the separator chamber.

A tangential cyclone separator consists essentially of four parts: The inlet cylinder (top), the cone (center), the particle collection vessel or hopper (bottom), and the dip tube (centered down from the top of the inlet cylinder). In the inlet cylinder, the product gas/particle mixture is injected tangentially and brought into a circular path. Due to the taper of the subsequent cone, the rotational speed increases to such an extent that the particles are thrown against the cone walls by the centrifugal force and slowed down to such an extent that they break away from the flow and trickle down into the collecting vessel. The purified product gas exits the cone upward through the central dip tube. The guidance of the mixture can be reinforced by baffles attached to the inner wall of the separator in the shape of a spiral. To prevent the vortex from tearing particles out of the hopper again, the transition from the cone to the hopper is often additionally closed by an apex cone standing in the center, leaving only an annular slot between the cone wall and the apex cone through which the particles enter the hopper. The hopper can be emptied during operation, with discharge taking place via a rotary valve to prevent gas exchange with the environment.

In axial separators, the swirl is mostly generated by guide vanes. The immersion tube is located opposite the gas inlet. The separated particles pass through an annular gap between the separator wall and the immersion tube into a collecting vessel. In contrast to the tangential cyclone separator, the direction of flow is not reversed in the case of the axial separator.

Since it is not practical to use a correspondingly large cyclone for larger product gas flows, in such cases often several smaller cyclones connected in parallel are combined in a housing to form a multicyclone. Axial separators are generally used for the operation of multicyclones. These can consist of up to several hundred individual separators.

In a fabric filter, solid particles are separated from the product gas. The particles mainly accumulate on the outside of the filter material and form a so-called filter cake, which then itself acts as a highly efficient separator. Due to the filter cake, the differential pressure in the filter system and thus the energy consumption increases continuously, making regular regeneration necessary. This usually takes place by means of a gas pulse introduced against the direction of flow, which ensures that the filter cake is thrown off. The ejected filter cake is usually removed from the collection hopper of the filter system by means of a rotary valve.

An example of a fabric filter is a bag filter. This is a surface filter in which the filter medium is formed into a tube. As filtering separators, bag filters have become established in gas cleaning and dust removal in numerous industrial processes. Bag filters consist of fiber material woven into tubes. In hot gas filtration, metallic wire mesh is frequently used. The product gas containing solid particles is ideally fed to the filter bags in a crossflow to avoid upflow against the sedimentation direction of the particles. The product gas is directed over a distribution plate where preseparation takes place and the product gas flow in the filter housing is equalized. The actual separation of the particles takes place on the surface of the filter medium or of the filter cake depositing on it.

When an electric filter is used, the product gas leaving the reactor is dedusted. In electrical particle separation, solid particles are negatively charged in the gas stream with the aid of spray electrodes and deposited on opposite precipitation anodes. A DC voltage of 30 to 80 kV, for example, is applied between the spray and precipitation electrodes. The specific resistance of the charged particles is decisive for deposition. If this is too high, deposition no longer takes place. The separated solids are conveyed to a solids silo. The solids are discharged either dry or with the aid of a mixing screw, after the solids have previously been moistened with water.

In step g) the solids contained in the the product gas are removed in the separation device, thereby producing a purified product gas having no or a reduced solids content. Preferably at least 90 weight-%, more preferred more than 99 weight-% of the solids present in the product gas entering the separation device are removed by this device.

In step h) the purified product gas is discharged from the separation device.

In step i) thermal energy generated when oxidizing the metal main fuel is extracted and transferred into a heat transfer medium. This thermal energy is used for generation of electrical energy and/or for heating.

In step i) the thermal energy generated in the reaction space, contained in the product gas and/or in the purified product gas is transferred into a heat transfer medium. This is achieved by means of one or more heat exchangers connected with the reactor jacket and/or one or more heat exchangers connected with the discharge line between the reaction space exit zone and the separation device and/or one or more heat exchangers connected with a line removing the purified product gas from the separation device.

Heat transfer media used in the heat exchanger(s) are known to the skilled artisan. Examples of heat transfer media are water, glycols, glycerine, molten metals, molten salts or thermal oils, such as silicones or high-boiling hydrocarbons. Preferred heat transfer media are water, thermal oils or molten salts.

The thermal energy contained in the heat transfer media can be supplied to an exploiting consumer. Exploiting consumers can be almost all technical and chemical energy converters. In particular, low-pressure or high-pressure steam turbines for power generation, Stirling engines and other heat engines or direct power generators on temperature gradients, thermolysis reactors, in particular reactors for water thermolysis to hydrogen can be mentioned as exploiting consumers.

The hydrogen or hydrogen/carbon monoxide generated in the process of this invention is stored or fed to a chemical conversion. The generated energy can be dissipated for energy conversion or heat or cold generation, e.g. for heating, by storing it or consuming it directly or indirectly. The thermal energy generated can, for example, be fed to a low-pressure or, preferably, a high-pressure steam turbine in order to generate electricity.

In a specific embodiment of the process and the reactor of this invention a portion of the heat generated in the process is backfeeded to the reactants introduced into the reactor. This includes backfeeding of partially reacted particle mixtures. These measures result in an increase of temperature to in an almost complete and fast depletion of oxygen to avoid any other products than the intended metal-oxide mineralic particles and H₂ or CO or H₂ and CO which would otherwise be a source of stranded carbides mixed compounds. Moreover, in case of transport gas being N₂ unfavourable toxic NOₓ is generated in amounts far below 100 mg/m³ a value rarely obtained by classical high temperature fuel combustion.

In another preferred embodiment of the process and the reactor of this invention the rate of reaction is not only controlled through the intake of the metal particles and their flow mode, such as swirl rotation, concentric laminar, angular perpendicular or even confluent controversial injection, but also through the point of contact were the mass inflow of metallic main fuel contacts the temperature zones of the first flame(s).

In another embodiment of the process and the reactor of this invention different metals used to generate the high atomizing vapour metal main fuel zone for the reaction. Particulate metals, such as Mg, Si, Fe, Ti, Ca, Va, Ge, Ni, Mn, Zn and Sn may be used for generating the first flame to provide the overall two stage vapourizing action by the interplay between first and second flame. Preferably Si, Mg, Fe or Al are used for generating the first flame, most preferred is Al.

In a preferred embodiment of the process and the reactor of this invention the same metals are used for generating the first and the second flame. Most preferred Al is used for generating the first and the second flame.

The process and the reactor of this invention establish a controlled first oxidizing reaction stage with net negative enthalpy by generating a first flame. And in the same reactor a second reaction stage with higher turnover and negatve enthalpie is established giving a joined enthalpy to the heat of reaction.

A preferred process or reactor uses a first inlet and a second inlet for injecting a particle stream of metall fuel, e.g. by using a transport gas or a ballistic mass acceleration similar to a pump swirl or propeller. The first metal fuel powder for generating the first flame may have a particle size in the range between 1 and 500 µm, but also particle sizes of smaller than 1 µm are possible. The second metal fuel powder for generating the second flame may have a much higher particle size, e.g. a particle size in the range of 100 µm to 1 mm or larger. The heat of the first flame and a portion of the heat of the back-feeded partially reacted particle mixtures will allow a substantial micronization and vapourisation in-process of the second metal fuel feed to improve conversion to a satisfactory steady state flame process, which would not be obtained without the in-process micronisation by the heat of the first flame. Statistical thermodynamic consideration shows that such first flame core would need to be close to 2500, 2700 or above 3000°C in order to generate a self sustained second flame zone with the same oders of temperature.

This yield is in contrast to normal gas or petro-fuel burning as strong oxygen concentration may yield higher reactor temperature and might get close to the temperatures mentioned above. However, the adiabatic temperature is limited strongly by the onset of the product dissociation CO₂ and H₂O which are not produced in the process of this invention.

Surprisingly, those high temperatures generated in the process and reactor of this invention can be well managed, controlled and brought to the respective energy transforming heat exchangers of standard equipment. In industrial scale the dome of the exchangers would be needed to be sized according to black-body radiation and are not a concern for large scale equipment. This means that high temperatures support heat transfer by radiation. Thus the heat exchangers are no longer dependent on high chaotic gas flow transport, but radiation is the guiding design principle for the effective fuel reactor flame cell with obvious scaling (size) and numbering (parallel reactor) advantages.

The metal oxides, such as alumina, resulting form the process of this invention is of best quality and contains metal traces which would allow for further circulating loops as well as for direct use of this high quality product into smelter circular use much better than any mineral feedstock technically available for smelter metal production. This quality solid phase after separation from the gases via standard means like cyclones or solid product ash traps is as a typical product of the inventive process. A product with such quality can otherwise only be obtained via multi step labourious and costly additional rectification.

Transported via carrier gas, typically a mixture of an inert carrier and oxidant, such as water vapour / CO₂, is introduced into the reaction space so that the second flame is stable over a continuous period of time. Preferably, the reaction proceeds in a heat and gas controlling apparatus so that hot gases can be returned to the input zone of the reactor and the reaction products including the thermal energy generated during the reaction can be exploited and separated in a controlled manner.

Very advantageously the generation of the first flame stage uses low size micronized metal powder in order to stabilize or ignite and tune the second flame. The metal main fuel for the second flame can be of less granulation, higher size or different qualities, such as in liquid form (liqiud metal injection) or even solid forms, such as bars, wires or pellets.

In another preferred embodiment the first flame is stabilized and controlled and shapedvia flow rotation e.g. by a swirl, for example by using a mixing device.

The reactor of this invention contains a reaction space A) formed by a reactor jacket. Reaction space contains an inlet zone for reactants, a central zone and an outlet zone for a product gas. The reactor has at least one feed line for metallic main fuel and/or for mixtures containing H₂O, CO₂ and/or NH₃ and optionally inert gas(es) said feed line(s) open into the inlet zone. The reactor has at least one discharge line for the product gas generated in the reaction space said discharge line being located in the outlet zone. In the zone between the inlet zone and the outlet zone a central zone is present in which the reaction between metallic fuel and oxidant continues. Thus, this reaction occurs in the inlet zone and in the central zone or in a portion of the central zone.

The reactor housing is made from heat resistant material, such as high melting metals, e.g. steel, molybdenum or tungsten, or ceramics or refractory bricks. The shape of the reactor can vary to a large extent. Reactors can have various forms, for example reactors can be in the shape of a tube or a bundle of tubes. In an alternative embodiment reactors define a reaction space of different shape, e.g. in the form of a cuboid. In this embodiment the reactor walls are lined with refractory bricks.

The reactor contains two or more feed lines for fuel discharge into the inlet zone. For cylindrical reactors these feed lines may proceed axially or parallel to the cylinder axis and/or proceeding radially perpendicular through the reactor jacket into the inlet zone or proceeding tangentially trough the reactor jacket. Combinations of these line routings are possible.

The inlet zone may be a portion of the reaction space beginning immediately after a circular end face of a cylindrical reactor. In another embodiment the inlet zone may have a conical shape and is attached to one of the circular end faces of the cylindrical reactor jacket.

Through the feed lines fuel metal fuel and oxidant are introduced into the inlet zone. Fuel for the first flame is introduced via one or more feed lines D) into the inlet zone. Fuel for the second flame is introduced via one or more feed lines into the inlet zone. Metal fuel may be introduced via one line and oxidant may be introduced via another line or a mixture of metal fuel and oxidant may be introduced in one or more feed line(s).

Feed line(s) D) terminate in the inlet zone and introduce the fuel for the first flame into this zone. At the end of this line/these lines an ignition device E) acts upon the fuel and ignites the first flame. One or more first flames can be generated in the inlet zone. The first flame is used to start the main reaction to result in a second flame. Besides ignition of the second flame the first flame can be used to support the main reaction. In this embodiment the first flame will continue to exist or will exist intermittently after ignition of the second flame.

Different ignition devices E) may be used. Examples thereof are given above.

The reactor jacket may contain a window for monitoring the reaction processes in the reaction space and/or to provide laser radiation into the reactor space to ignite the first flame.

The reactor jacket is preferably equipped with a heat exchanger C) for recovering thermal energy produced by the reaction process in the reaction space.

The reactor contains one or more discharge lines for discharging product gas from the exit zone into the separation device(s). The exit zone is a portion of the reaction space beginning immediately before the outlet for the product gas of the reactor. In a cylindrical reactor the exit zone begins upstream the circular end face. The discharge line may be one or more tubes or a conical hollow body with is attached to the circular end face of the cylindrical reactor and is connected with a separation device.

The discharge line is preferably equipped with a heat exchanger C) for recovering thermal energy from the product gas leaving the reactor.

Separation device B) is used to remove solid particles from the product gas. Different separation devices B) may be used. Examples thereof are given above.

The purified product gas leaving the separation device via a discharge line may be fed to one or more heat exchanger(s) in order to transfer the thermal energy contained in said purified product gas to a heat transfer medium. Thereafter, the cooled product gas is fed into storage container(s) or is transferred to a plant for further processing. In an alternative embodiment the hot purified product gas is fed directly via a discharge line to a plant for further processing.

Heat recovery can be achieved using classical heat exchangers known to the skilled artisan.

In a preferred process of this invention the metallic fuel provided in step a) is introduced into the inlet zone of the reaction space in the form of a powder, chips, pellets, ingots or metal rods.

In another preferred process of this invention the metallic fuel provided in step a) is an aluminium-magnesium alloy or preferably aluminium and the oxidized metal generated in step e) is aluminia.

In still another preferred process of this invention the H₂O introduced into the inlet zone of the reaction space in step b) is in the form of a water mist or, in particular, as water vapor.

In a preferred variant of this embodiment water vapor or a mixture of water vapor and carbon dioxide or a mixture of water vapor and ammonia is introduced in step b), the water vapor or the mixtures optionally being diluted with inert gas, in particular with nitrogen.

Another preferred process of this invention relates to introduction of the metallic fuel and the H₂O or CO₂ or the mixture containing H₂O, CO₂ and/or NH₃ into the inlet zone of a cylindrical reaction space via one or more axially and/or radially and/or tangentially extending pipes.

In a preferred variant of this embodiment inert gas and/or water vapor or mixture containing water vapor, carbon dioxide and/or ammonia are introduced into the inlet zone of the reaction space via a plurality of pipes tangentially extending through the reactor jacket, as a result of which a vortex is formed in the reaction space which moves in the direction towards the outlet zone.

In a preferred embodiment of the process of this invention the mixture introducted in step c) is a hydrogen-oxygen mixture, a hydrogen-air mixture, a hydrogen-chlorine mixture, an acetylene-air mixture or a mixture of metal particles with diameters of less than 100 µm and water vapor.

In another preferred embodiment of the process of this invention the first flame is ignited by using an ignition device, preferably by using an electric arc arranged in the inlet zone, an inductive heater or a laser arranged outside the reactor, the radiation of which is coupled into the reaction chamber through one or more windows in the reactor jacketl, so that the electric arc, inductive heater and/or laser radiation act on the mixture introduced in step c).

Preferably, the second flame in step e) generates temperatures above 2000°C by the reaction of the metallic fuel with the H₂O or CO₂ or with the H₂O, CO₂ and/or NH₃.

In a preferred variant of this embodiment the temperatures generated in the second flame in step e) cause evaporation of a portion of the metallic fuel.

In another preferred embodiment of the process of this invention the product gas is introduced in step f) into one or more cyclones.

In still another preferred embodiment of the process of this invention the thermal energy generated in the reaction space is transferred to a heat transfer medium running through a heat exchanger which is connected with the reactor jacket and/or that the thermal energy of the product gas is transferred to a heat transfer medium running through a heat exchanger connected with the discharge line between the reaction space exit zone and the separation device and/or that the thermal energy of the purified product gas is transferred to a heat transfer medium running through a heat exchanger connected with a line removing the purified product gas from the separation device.

Preferably the outer jacket of the reactor is cooled by means of a heat transfer medium, preferably by using water.

In a preferred variant of this embodiment the heat transfer medium running through the heat exchanger(s) is water, a thermal oil or a molten salt.

In another preferred embodiment of the process of this invention the hot purified product gas is introduced into a heat exchanger located downstream the separation device for cooling said purified product gas and the thermal energy contained in said purified product gas is fed to a heat transfer medium. In an alternative embodiment the hot purified product gas is fed from the separation device into a chemical reactor in order to carry out reduction reactions with the hydrogen contained in the purified product gas or to react the mixture of hydrogen and carbon monoxide contained in the purified product gas.

The hydrogen, the carbon monoxide or the hydrogen/carbon monoxide generated in the process of this invention my become chemically reacted on site. For this purpose, a variety of chemical reactions are available in which these basic material(s) can be refined. For example, hydrogen can be used for hydrogenation of organic compounds or in reduction reactions, for example in ammonia synthesis or in the manufacture of iron from iron oxide. Carbon monoxide can be reacted with water to form methanol, for example. Preferably, carbon monoxide and hydrogen can be further processed in a Fischer-Tropsch reaction to various organic compounds.

The combined production of carbon monoxide and hydrogen in the process of this invention and the direct further processing of both basic materials in a Fischer-Tropsch react is therefore preferred. The heat energy extracted from the process of this invenion can advantageously be utilized in this process.

In order to provide a process with a zero CO₂ footprint which is a preferred process of this invention the metal used as metallic fuel has been produced from metal oxides without generating CO₂, preferably in a fused-salt electrolysis plant, which has no carbon electrodes.

A preferred reactor of this invention is characterized by a reaction space which is a volume enclosed by refractory bricks or which is the interior of a cylindrical jacket made of metal or ceramics.

In a preferred variant of this embodiment the reactor contains a cylindrical reaction space, into the inlet zone of which one to five axially extending feed lines open, preferably two or three axially extending feedlines and/or into the inlet zone of which one or more feed lines extending radially through the outer reactor jacket open into its inlet zone, provided that at least one feed line is available for introducing a mixture of particles of metallic fuel and oxidant or a mixture of hydrogen and oxidant.

In another preferred variant of this embodiment the reactor contains a cylindrical reactor jacket through which a plurality of feed lines pass tangentially to feed the inlet zone with reactants.

In another preferred reactor of this invention the ignition device is selected from one or more electric arcs arranged in the inlet zone at the end of the feed line D) and/or one or more inductive heaters or lasers are arranged outside the reactor, the radiation of the laser is coupled into the reaction space through one or more windows in the reactor jacket, so that electric arcs and/or electromagnetic radiation and/or laser radiation act on the space region at the end of the feed line D) to generate the first flame.

In another preferred reactor of this invention a cylindrical reaction jacket is provided through which a plurality of feed lines pass tangentially to feed the inlet zone with inert gas and/or water vapor, CO₂ or a mixture containing water vapor, carbon dioxide and/or ammonia, as a result of which a vortex is formed on the interior of the reaction jacket, which vortex moves in the direction of the outlet zone.

In still another preferred reactor of this invention the separation device is one or more cyclones, preferably two or three cyclones.

In another preferred reactor of this invention this contains a heat exchanger which is connected with the reactor jacket and/or this contains a heat exchanger connected with the discharge line between the reaction space exit zone and the separation device and/or this contains a heat exchanger connected with a discharge line removing the purified product gas from the separation device, or this contains a discharge line for the hot purified product gas from the separation device which is connected with a chemical reactor to carry out reduction reactions with the hydrogen contained in the purified product gas or to react the mixture of hydrogen and carbon monoxide contained in the purified product gas.

### Description of the Drawings

Figure 1 shows a reactor of this invention with axially arranged feed lines for metal fuel and oxidant.
Figure 2 shows a reactor of this invention with axially and radially arranged feed lines for metal fuel and oxidant. In this embodiment the second flame forms a swirl around the first flame.
Figure 3 shows a reactor of this invention with axially and radially arranged feed lines for metal fuel and oxidant. In this embodiment the fist flame forms a swirl around the second flame.

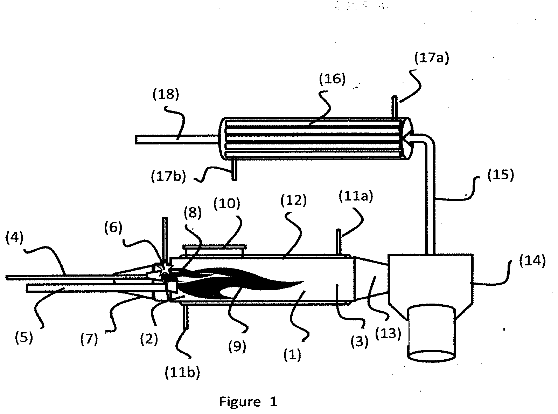

The reactors illustrated in Figures 1 to 3 are modified embodiments of a reactor disclosed in an article of F. Halter et al. in Applicatinos in Energy and combustion Science, Vol. 13, https://doi.org/10.1016 (2023).

The reactor of Figure 1 contains a reaction space (1) with an inlet zone (2) for reactants and an exit zone (3) for product gas. Inlet zone (2) contains axial feed tubes for a mixture of metal fuel and oxidant (4, 5) for the first flame (8) and the second flame (9). Close to the end of axial feed line (4) an ignition device (6) is positioned. Ignition device (6) forms an electric arc and ignites the fuel transported through feed line (4) resulting in the first flame (8). This first flame (8) in turn ignites the fuel transported through feed line (5) resulting in the second flame (9). The reactor is formed by a cylindrical reactor jacket containing a window (10) for inspecting the reaction taking place in the interior of the reactor. Reactor jacket is surrounded by a heat exchanger (12) having an inlet line (11a) and an exit line (11b) for heat transfer medium, e.g. water. One front end of the cylindrical reactor jacket is sealed by a conically shaped end piece (7). Axial feed lines (4, 5) pass through end piece (7). The other circular end face of the cylindrical reactor jacket is connected with a conical discharge line (13) for the product gas which connects exit zone (3) with a cyclone (14) for separating solid particles from the product gas. The purified product gas is fed from cyclone (14) va line (15) to heat exchanger (16) for extraction of thermal energy from the purified product gas to a heat transfer medium, e.g. water. Heat exchanger (16) has an inlet line (17a) and an exit line (17b) for the heat transfer medium as well as a discharge line (18) for the cooled product gas.

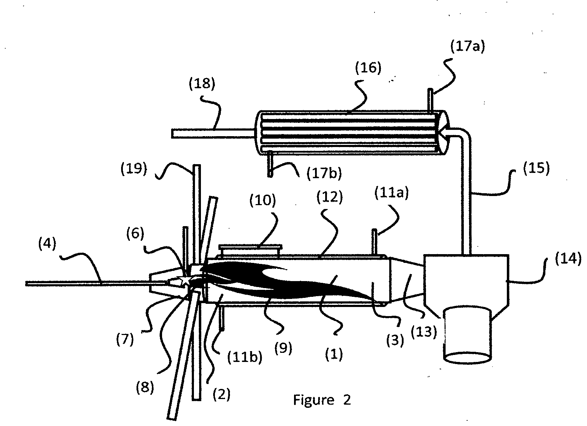

The reactor of Figure 2 contains a reaction space (1) with an inlet zone (2) for reactants and an exit zone (3) for product gas. Inlet zone (2) contains an axial feed tube for a mixture of metal fuel and oxidant (4) for the first flame (8) and several radially or tangentially arranged feed lines (19) for the metal main fuel or oxidant(s) or for a mixture of metal main fuel and oxidant(s) for the second flame (9). Caused by the radial or tangential introduction of metal main fuel and oxidant(s) the second flame forms (9) a swirl around the first flame (8) and propagates as a swirl in the direction of the exit zone (3). Close to the end of axial feed line (4) an ignition device (6) is positioned. Ignition device (6) forms an electric arc and ignites the fuel transported through feed line (4) resulting in the first flame (8). This first flame (8) in turn ignites the fuel transported through feed lines (19) resulting in the second flame (9). The reactor is formed by a cylindrical reactor jacket containing a window (10) for inspecting the reaction taking place in the interior of the reactor. Reactor jacket is surrounded by a heat exchanger (12) having an inlet line (11a) and an exit line (11b) for heat transfer medium, e.g. water. One front end of the cylindrical reactor jacket is sealed by a conically shaped end piece (7). Axial feed line (4) passes through end piece (7). The other circular end face of the cylindrical reactor jacket is connected with a conical discharge line (13) for the product gas which connects exit zone (3) with a cyclone (14) for separating solid particles from the product gas. The purified product gas is fed from cyclone (14) va line (15) to heat exchanger (16) for extraction of thermal energy from the purified product gas to a heat transfer medium, e.g. water. Heat exchanger (16) has an inlet line (17a) and an exit line (17b) for the heat transfer medium as well as a discharge line (18) for the cooled product gas.

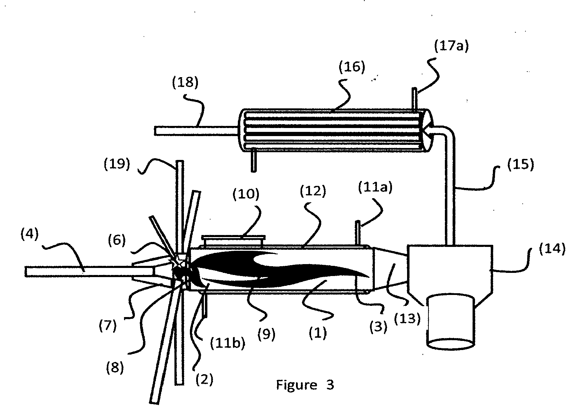

The reactor of Figure 3 contains a reaction space (1) with an inlet zone (2) for reactants and an exit zone (3) for product gas. Inlet zone (2) contains an axial feed tube for a mixture of metal main fuel and oxidant(s) (4) for the second flame (9) and several radially or tangentially arranged feed lines (19) for the metal fuel or oxidant(s) or for a mixture of metal fuel and oxidant(s) for the first flame (8). Caused by the radial or tangential introduction of metal fuel and oxidant(s) the first flame forms (8) a swirl around the first flame (9) and propagates as a swirl in the direction of the exit zone (3). Close to the end of at least one of the radial or tangential feed line(s) (19) an ignition device (6) is positioned. Ignition device (6) forms an electric arc and ignites the fuel transported through feed line(s) (19) resulting in the first flame (8). This first flame (8) in turn ignites the fuel transported through feed line (4) resulting in the second flame (9). The reactor is formed by a cylindrical reactor jacket containing a window (10) for inspecting the reaction taking place in the interior of the reactor. Reactor jacket is surrounded by a heat exchanger (12) having an inlet line (11a) and an exit line (11b) for heat transfer medium, e.g. water. One front end of the cylindrical reactor jacket is sealed by a conically shaped end piece (7). Axial feed line (4) passes through end piece (7). The other circular end face of the cylindrical reactor jacket is connected with a conical discharge line (13) for the product gas which connects exit zone (3) with a cyclone (14) for separating solid particles from the product gas. The purified product gas is fed from cyclone (14) va line (15) to heat exchanger (16) for extraction of thermal energy from the purified product gas to a heat transfer medium, e.g. water. Heat exchanger (16) has an inlet line (17a) and an exit line (17b) for the heat transfer medium as well as a discharge line (18) for the cooled product gas.

The following examples describe the invention without limiting it to the examples.

### Examples 1 and 2, general considerations

The reactor designed for both generation of heat and valuable chemical products and illustrated in Figure 3 is composed of the following main parts:
- H₂O, CO₂ and aluminium injection
- reaction chamber with an optical access for the observation of the flame
- ignition device for generating the first flame
- particles separation device(s)
- heat exchangers.

The reaction chamber is surrounded by a cooled double-walled pipe, 0.6 m long with an internal diameter of 0.105 m.

The gaseous reaction products and oxide particles are driven through a convergent line to the tangential entry of a first cyclone. A second cyclone improves solid oxide trapping. Then the hot gas flows to a secondary heat exchanger.

The metal fuel is aluminium powder with a purity greater than 99.8% and supplied by Carl Roth.

Solid fuel injection was performed by using a PALAS BEG 1000 type B which allows a continuous and homogeneous injection of particles.

The gas temperature profile in the reaction chamber is characterized using a set of type K thermocouples located along the chamber axis.

Additionally, the temperature of particles in the first and second flame are measured using an IMPAC infrared ISR 12-LO bichromatic pyrometer (λ₁=800 nm, λ₂=1050 nm).

### Example 1

For the first flame: Initial reaction between pulverized Al (17µm) and O₂ reaching more than 2000°C. Once a stable flame is obtained, oxygen was progressively and totally replaced by steam in a swirl reactor using tangential inert gas for dilution and dispersion. Dilution has a safety and temperature control purpose for this specific experimental setup only.

Once the first flame is stable, the second flame was ignited in the following conditions: Initial reaction between pulverized Al (5-20 µm) and additional steam in the order of equi-stochiometric conditions reaching more than 2000°C. Pulverized aluminum size was progressively increased up to 200 µm to prove the versatility of the invention.

Delivered power between 2 and 25kW was achieved with a combined mass flowrate of 0.1 to 1 g/s of pulverized Aluminum. Aluminum oxide collected showed satisfactory measurable conversion and yield at this stage of experimental setup. Unreacted aluminum traces could be easily explained by the initial ignition process.

### Example 2

For the first flame: Initial reaction between pulverized Al (17µm) and O₂ reaching more than 2000°C. Once a stable flame is obtained, oxygen was progressively and totally replaced by CO₂ in a swirl reactor using tangential inert gas for dilution and dispersion. Dilution has a safety and temperature control purpose for this specific experimental setup only.

Once the first flame is stable, the second flame was ignited in the following conditions: Initial reaction between pulverized Al (5-20 µm) and additional CO₂ in the order of equi-stochiometric conditions reaching more than 2000°C. Pulverized aluminum size was progressively increased up to 200 µm to prove the versatility of the invention.

Delivered power between 2 and 25kW was achieved with a combined mass flowrate of 0.1 to 1 g/s of pulverized Aluminum. Aluminum oxide collected showed satisfactory measurable conversion and yield at this stage of experimental setup. Unreacted aluminum traces could be easily explained by the initial ignition process.

The injected oxidant flow rate ranges between 4.6 Nm³h⁻¹ and 8.6 Nm³h⁻¹.

Heat recovery is achieved with the water-cooled reaction chamber and with the secondary heat exchanger.

The first flame is stabilized by a swirled flow which is generated by a fuel stream injected through four tangential inlets into the inlet zone as shown in Fig. 3. Swirl stabilization allows a flame holding with a high power dissipated in a small sized oxidizer.

In the examples a first flame was used to stabilize a second flame wherein enough aluminium was atomized or vapourized to generate a self-sustained large adiabatic flame situation for full reaction.

The fuel for this second flame was progressively changed from an Al/O₂/N₂ mixture to an Al/CO₂/N₂ or Al/H₂O/N₂ mixture. The starting conditions for the gas(es) were: 5%CO₂/95%N₂ and 5%H₂O/95%N₂.

The total flow rate for the second flame fuel could be kept at 2.8 Nm³/h, which was approximately half of the primary flow rate. Under these conditions and with a complete reaction of CO₂ and H₂O in the second flame, the total flow rate out of the reaction chamber was a calculated 5.6 x 79/100 + 2.8 = 7.2 Nm³/h and those of CO and H₂ 2.8 x 5/100 = 0.14 Nm³/h maximum. With a targeted output of CO and H₂ volume fraction of 1.94%. A gradual increase in H₂ and CO volume being possible in the continuous second flame. The particles obtained in the cyclones showed the intended oxidation of the metal fuel.

## Claims

1. A process for producing thermal energy and base chemicals in a reactor having a reaction space with an inlet zone for reactants, a central zone and an outlet zone for a product gas, comprising at least the measures:
a) providing metallic main fuel selected from silicon, magnesium, iron, aluminum or alloy containing these metals in the inlet zone of the reaction space,
b) introducing H₂O or CO₂ or mixtures containing H₂O, CO₂ and/or NH₃ or H₂O, CO₂ or said mixtures diluted with inert gases into the inlet zone of the reaction space,
c) introducing particles of metallic secondary fuel and oxidant or hydrogen and oxidant or mixtures of two or more of said particles, hydrogen and oxidant into said inlet zone using one or more feed lines ending in said inlet zone and generating a mixture of said particles and oxidant or of said hydrogen and oxidant at the end of said feed line(s),
d) providing a first flame generated by oxidizing the mixture of particles of metallic secondary fuel and oxidant or of hydrogen and oxidant at the end of said feed line(s) which first flame is directed towards the metallic main fuel present in the inlet zone,
e) generating a reaction zone by the action of said first flame by melting and/or evaporating a portion of said metallic main fuel thereby causing said metallic main fuel to react with the H₂O, with the CO₂ or with the H₂O, CO₂ and/or NH₃ to generate a second flame resulting in a product gas containing hydrogen and oxidized metal or carbon monoxide and oxidized metal or hydrogen, carbon monoxide and/or nitrogen and oxidized metal and optionally inert gas(es),
f) discharging the product gas from the reaction space exit zone via a discharge line and introducing the product gas into a separation device for solids,
g) separating the solids from the product gas in the separation device, thereby producing a purified product gas having no or a reduced solids content,
h) discharging the purified product gas from the separation device, and
i) transferring thermal energy generated in the reaction space, in the product gas and/or in the purified product gas into a heat transfer medium and using this thermal energy for generation of electrical energy and/or for heating purposes.

2. The process according to claim 1, **characterized in that** the metallic main fuel provided in step a) is introduced into the inlet zone of the reaction space in the form of a powder, chips, pellets, ingots or metal rods.

3. The process according to claim 1 or 2, **characterized in that** the metallic main fuel provided in step a) is an aluminium-magnesium alloy or preferably aluminium.

4. The process according to at least one of claims 1 to 3, **characterized in that** the H₂O introduced into the inlet zone of the reaction space in step b) is in the form of a water mist or, in particular, as water vapor.

5. The process according to claim 4, **characterized in that** in step b) water vapor or a mixture of water vapor and carbon dioxide or a mixture of water vapor and ammonia is introduced, the water vapor or the mixtures optionally being diluted with inert gas, in particular with nitrogen.

6. The process according to at least one of claims 1 to 5, **characterized in that** the metallic main fuel and the H₂O or the CO₂ or the mixture containing H₂O, CO₂ and/or NH₃ are introduced into the inlet zone of a cylindrical reaction space via one or more axially and/or radially and/or tangentially extending pipes.

7. The process according to claim 6, **characterized in that** inert gas and/or water vapor, or CO₂ or mixture containing water vapor, carbon dioxide and/or ammonia are introduced into the inlet zone of the reaction space via a plurality of pipes tangentially extending through the reactor jacket, as a result of which a vortex is formed in the reaction space which moves in the direction towards the outlet zone.

8. The process according to at least one of claims 1 to 7, **characterized in that** the mixture introducted in step c) is a hydrogen-oxygen mixture, a hydrogen-air mixture, a hydrogen-chlorine mixture, an acetylene-air mixture or a mixture of metal particles with diameters of less than 100 µm) and water vapor.

9. The process according to at least one of claims 1 to 8, **characterized in that** the first flame is ignited by using an ignition device, preferably by using an electric arc arranged in the inlet zone, an inductive heater or a laser arranged outside the reactor, the radiation of which is coupled into the reaction chamber through one or more windows in the reactor jacket, so that the electric arc, inductive heater and/or laser radiation act on the mixture introduced in step c).

10. The process according to at least one of claims 1 to 9, **characterized in that** the second flame in step e) generates temperatures of 2500°C or above by the reaction of the metallic main fuel with the H₂O or with the H₂O, CO₂ and/or NH₃.

11. The process according to at least one of claims 1 to 10, **characterized in that** the temperatures generated in the second flame in step e) cause evaporation of a portion of the metallic main fuel.

12. The process according to at least one of claims 1 to 11, **characterized in that** the same metal is used for generating the first flame and the second flame, preferably aluminium.

13. The process according to claim 3, **characterized in that** oxidized metal generated in step e) is aluminia.

14. The process according to at least one of claims 1 to 13, **characterized in that** the product gas is introduced in step f) into one or more cyclones.

15. The process according to at least one of claims 1 to 14, **characterized in that** the thermal energy generated in the reaction space is transferred to a heat transfer medium running through a heat exchanger which is connected with the reactor jacket and/or that the thermal energy of the product gas is transferred to a heat transfer medium running through a heat exchanger connected with the discharge line between the reaction space exit zone and the separation device and/or that the thermal energy of the purified product gas is transferred to a heat transfer medium running through a heat exchanger connected with a line removing the purified product gas from the separation device.

16. The process according to claim 15, **characterized in that** the heat transfer medium running through the heat exchanger(s) is water, a thermal oil or a molten salt.

17. The process according to at least one of claims 1 to 16, **characterized in that** the hot purified product gas is introduced into a heat exchanger located downstream the separation device for cooling said purified product gas and that the thermal energy contained in said purified product gas is fed to a heat transfer medium, or that the hot purified product gas is fed from the separation device into a chemical reactor in order to carry out reduction reactions with the hydrogen contained in the purified product gas or to react the mixture of hydrogen and carbon monoxide contained in the purified product gas.

18. The process according to at least one of claims 1 to 17, **characterized in that** the outer jacket of the reactor is cooled by means of a heat transfer medium, preferably of water.

19. The process according to at least one of claims 1 to 18, **characterized in that** the metal used as metallic main fuel or as metallic secondary fuel has been produced from metal oxides without generating CO₂, preferably in a fused-salt electrolysis plant, which has no carbon electrodes.

20. A reactor for generating thermal energy and base chemicals containing at least the elements:
A) a reaction space formed by a reactor jacket with an inlet zone for reactants, a central zone and an outlet zone for a product gas, which has at least one feed line opening into the inlet zone for metallic main fuel and/or for H₂O or CO₂ or for mixtures containing H₂O, CO₂ and/or NH₃ and optionally inert gas(es) and at least one discharge line located in the outlet zone for the product gas,
B) at least one separation device for solids from the product gas, which is connected to the discharge line from the reaction space, and in which a purified product gas is produced,
C) at least one heat exchanger transferring thermal energy generated in the reaction space, in the product gas and/or in the purified product gas into a heat transfer medium, which heat exchanger is connected with the reactor jacket and/or connected with the discharge line from the reaction space to the separation device and/or connected with a discharge line removing the purified product gas from the separation device, **characterised in that**
D) at least one feed line for particles of metallic secondary fuel or hydrogen or oxidant or for mixtures of said particles, hydrogen and/or oxidant which ends in said inlet zone and supplies said particles, hydrogen, oxidant or mixtures thereof to generate a mixture of said particles and oxidant or of said hydrogen and oxidant at the end of said feed line(s) for establishing a first flame, and
E) at least one ignition device to ignite the mixture at the end of said feed line(s) D) to generate a first flame at the end of said feed line(s) thereby generating a reaction zone by transferring thermal energy to metallic main fuel present in the inlet zone of said reaction space to cause a portion of the metallic main fuel to melt and/or to evaporate and to ignite a second flame by initiating reaction of the metallic main fuel with the H₂O or with the mixture containing H₂O, CO₂ and/or NH₃.

21. The reactor according to claim 20, **characterized in that** the reaction space is a volume enclosed by refractory bricks or is preferably the interior of a cylindrical jacket made of metal or ceramics.

22. The reactor according to at least one of claims 20 to 21, **characterized in that** this contains a cylindrical reaction space, into the inlet zone of which one to five axially extending feed lines open, preferably two or three axially extending feedlines and/or **in that** one or more feed lines extending radially through the outer reactor jacket open into its inlet zone, provided that at least one feed line is available for introducing particles of metallic main fuel, H₂O, CO₂ or a mixture of particles of metallic main fuel, H₂O, CO₂ and/or NH₃ and that at least one feed line is available for introducing a mixture of particles of metallic secondary fuel and oxidant or a mixture of hydrogen and oxidant.

23. Reactor according to at least one of claims 20 to 22, **characterized in that** this contains a cylindrical reaction jacket through which a plurality of feed lines pass tangentially to feed the inlet zone with reactants.

24. The reactor according to at least one of claims 20 to 23, **characterized in that** the ignition device is selected from one or more electric arcs arranged in the inlet zone at the end of the feed line D) and/or one or more inductive heaters or lasers arranged outside the reactor, the radiation of the laser is coupled into the reaction space through one or more windows in the reactor wall, so that electric arcs and/or electromagnetic radiation and/or laser radiation act on the space region at the end of the feed line D) to generate the first flame.

25. The reactor according to at least oneof claims 20 to 24, **characterized in that** a cylindrical reactor jacket is provided through which a plurality of feed lines pass tangentially to feed the inlet zone with inert gas and/or water vapor, or CO₂ or a mixture containing water vapor, carbon dioxide and/or ammonia, as a result of which a vortex is formed on the interior of the reactor jacket, which vortex moves towards the direction of the outlet zone.

26. The reactor according to at least one of claims 20 to 25, **characterized in that** the separation device is one or more cyclones, preferably two or three cyclones.

27. The reactor according to at least one of claims 20 to 26, **characterized in that** this contains a heat exchanger which is connected with the reactor jacket and/or that contains a heat exchanger connected with the discharge line between the reaction space exit zone and the separation device and/or that contains a heat exchanger connected with a discharge line removing the purified product gas from the separation device, or this contains a discharge line for the hot purified product gas from the separation device which is connected with a plant to carry out reduction reactions with the hydrogen contained in the purified product gas or to react the mixture of hydrogen and carbon monoxide contained in the purified product gas.
